# EUROPEAN PATENT APPLICATION

(11) **EP 4 300 948 A1**
(43) Date of publication of application: **03.01.2024**
(21) Application number: 21935924.7
(22) Date of filing: 05.04.2021
(51) Int. Cl.: H04N 7/18

(54) **INFORMATION PROCESSING PROGRAM, DEVICE, AND METHOD**

(71) Applicant: FUJITSU LIMITED, Kawasaki-shi, Kanagawa 211-8588 (JP)
(72) Inventor: NAKAMURA, Kouji, Kawasaki-shi, Kanagawa 211-8588 (JP)
(74) Representative: Hoffmann Eitle
(86) International application number: PCT/JP2021/014499
(87) International publication number: WO 2022/215116

(57) **Abstract**

An information processing device (10): selects, on the basis of a position of an athlete (32) on a skating rink (30) acquired from an image captured via a camera for tracking (20) an optimal first camera (22A) and second camera (22B) from among plural cameras for identification (22) that image the athlete (32) from two intersecting directions; identifies a height of a specified part from images captured via the selected first camera (22A) and second camera (22B); and on the basis of a change in the height of the specified part, estimates the time of takeoff-from-ice and the time of landing-on-ice of a jump.

## Description

### FIELD

The disclosed technique relates to an information processing program, an information processing device, and an information processing method.

### BACKGROUND

Conventionally, extraction of a predetermined scene is performed from an image during a sports competition. The predetermined scene is, for example, a scene including an impact moment with respect to a ball in golf, baseball, tennis, or the like, a scene including jumping or landing in gymnastic sports, or the like.

As a technique related to scene extraction as described above, for example, an information processing device that identifies a decisive moment from continuous motion of a subject and extracts the decisive moment as an image has been proposed. This device receives sensor data from a sensor attached to a user or an object in contact with the user, and time information corresponding to the sensor data. This device also identifies a time at which a predetermined motion pattern is generated in the user or the object on the basis of the sensor data and the time information. This device then selects one or a plurality of images from a series of images including the user or the object imaged at a predetermined time interval according to the identified time.

### Related Patent Documents

Patent Document 1: Japanese Patent Application Laid-Open (JP-A) No. 2015-82817

### SUMMARY OF INVENTION

### Technical Problem

For a scene of a jump in figure skating, the present disclosure considers estimating the time of takeoff-from-ice and the time of landing-on-ice of a jump. In figure skating, a slight change, such as attachment of a sensor to an athlete or to a skating wear or shoes worn by the athlete, may affect the accuracy of a jump or the like. Therefore, it is difficult to estimate the time of takeoff-from-ice and the time of landing-on-ice of a jump in figure skating by applying the conventional art.

In one aspect, it is an object of the disclosed technique to estimate the time of takeoff-from-ice and the time of landing-on-ice of a jump in figure skating.

### Solution to Problem

In one aspect, the disclosed technique acquires an image captured via each of a plurality of cameras that images an athlete on a skating rink from two intersecting directions. The disclosed technique also identifies the height of a part in at least a portion of the athlete and an attachment worn by the athlete in each of a plurality of frames included in the image. The disclosed technique then estimates, on the basis of the change in the height, a time of takeoff-from-ice and a time of landing-on-ice of a jump performed by the athlete, from a frame corresponding to the time of takeoff-from-ice and a frame corresponding to the time of landing-on-ice of the jump.

### Advantageous Effects of Invention

In one aspect, there is an effect that it is possible to estimate the time of takeoff-from-ice and the time of landing-on-ice of a jump in figure skating.

### BRIEF DESCRIPTION OF DRAWINGS

Fig. 1 is a schematic diagram of an information processing system according to first and third embodiments.
Fig. 2 is a functional block diagram of an information processing device according to the first and third embodiments.
Fig. 3 is a diagram for explaining selection of an optimal camera for identification.
Fig. 4 is a diagram for explaining calculation of positions of a leading end and a trailing end of a blade as a specified part.
Fig. 5 is a diagram for explaining estimation of the time of takeoff-from-ice and the time of landing-on-ice in the first embodiment.
Fig. 6 is a diagram for explaining identification of a reference line.
Fig. 7 is a block diagram illustrating a schematic configuration of a computer functioning as an information processing device.
Fig. 8 is a flowchart illustrating an example of an information processing routine in the first embodiment.
Fig. 9 is a functional block diagram of an information processing device according to a second embodiment.
Fig. 10 is a diagram for explaining estimation of the time of takeoff-from-ice in the second embodiment.
Fig. 11 is a diagram for explaining estimation of the time of landing-on-ice in the second embodiment.
Fig. 12 is a diagram for explaining identification of the point of takeoff-from-ice and the point of landing-on-ice.
Fig. 13 is a diagram for explaining the details of the identification of the point of takeoff-from-ice.
Fig. 14 is a diagram illustrating a rotation angle θ calculated from each of frames included in an interval of jump.
Fig. 15 is an enlarged view of a portion indicated by a broken line frame in Fig. 14.
Fig. 16 is a flowchart illustrating an example of an information processing routine in the second embodiment.

### DESCRIPTION OF EMBODIMENTS

In the following, an example of an embodiment according to the disclosed technique will be described with reference to the drawings.

### <First Embodiment>

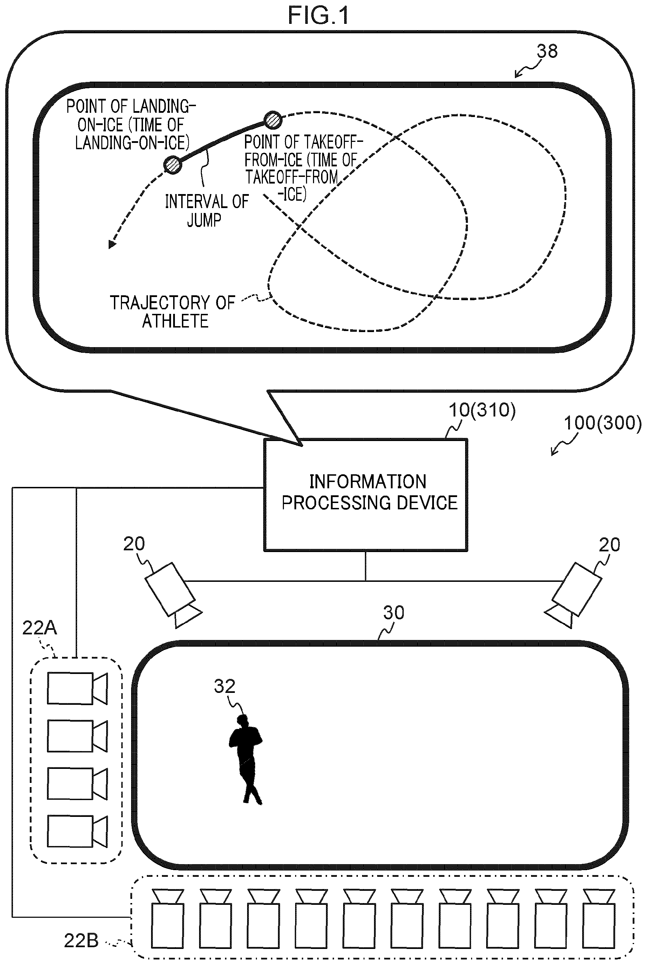

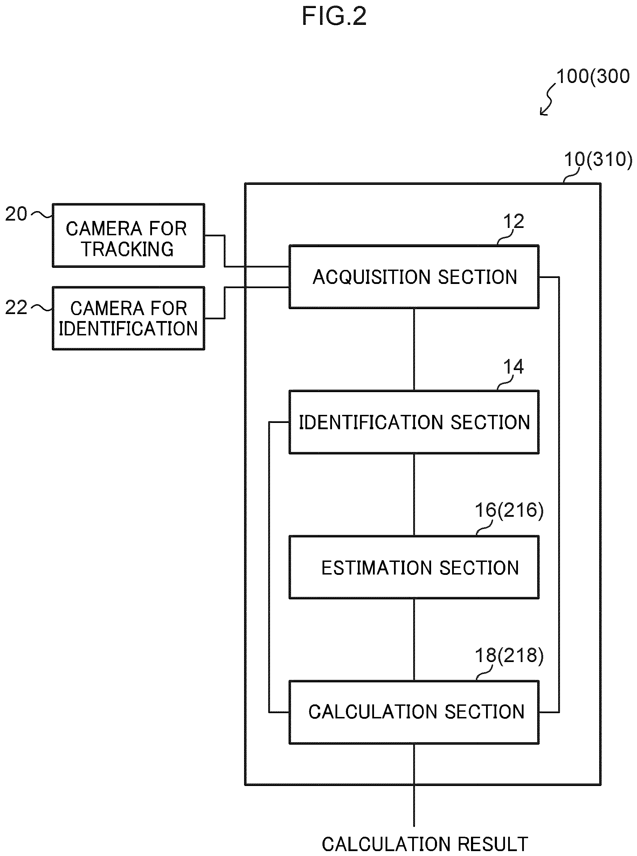

As illustrated in Figs. 1 and 2, an information processing system 100 according to a first embodiment includes an information processing device 10, a camera for tracking 20, and a camera for identification 22.

The camera for tracking 20 is, for example, an imaging device for motion tracking that images an image capable of identifying the position of an athlete 32 on a skating rink 30. For example, a plurality of (e.g., two) cameras for tracking 20 is installed on a ceiling, a side wall, or the like of a venue.

The camera for identification 22 is an imaging device that images the athlete 32 on the skating rink 30 from two intersecting directions. For example, the camera for identification 22 includes a plurality of first cameras 22A installed along the short side of the skating rink 30 so that the imaging direction is parallel to the long axis direction of the skating rink 30. The camera for identification 22 also includes a plurality of second cameras 22B installed along the long side of the skating rink 30 so that the imaging direction is parallel to the short axis direction of the skating rink. In the following, when the first camera 22A and the second camera 22B are described without being distinguished from each other, the first and second cameras are referred to as "cameras for identification 22". On the basis of the installation position and the imaging direction of each of the cameras for identification 22, the position coordinates of the position where the imaging direction of the first camera 22A and the imaging direction of the second camera 22B intersect with each other on the xy-plane in a plan view of the skating rink 30 are identified. In the following, position coordinates of a position at which the imaging direction of the i-th first camera 22A and the imaging direction of the j-th second camera 22B intersect with each other are set as (x_{c_ij},y_{c_ij}).

Each of the camera for tracking 20 and the camera for identification 22 outputs an image captured at a predetermined frame rate (e.g., 120 fps). The output image includes a plurality of frames, and time information is associated with each frame. Each image is temporally synchronized on the basis of the time information. Note that the number of each of the cameras for tracking 20 and the cameras for identification 22 is not limited to the examples of Figs. 1 and 2.

As illustrated in Fig. 2, the information processing device 10 functionally includes an acquisition section 12, an identification section 14, an estimation section 16, and a calculation section 18.

The acquisition section 12 acquires an image output from the camera for tracking 20. The acquisition section 12 acquires, from the acquired image, the position of the athlete 32 on the skating rink 30 by motion tracking. For example, the acquisition section 12 recognizes the athlete 32 who is a motion tracking target for each frame of the image captured via each camera for tracking 20. For example, the acquisition section 12 recognizes the athlete 32 from each frame on the basis of a feature such as a color, a shape, or the like of the athlete 32 or an attachment worn by the athlete 32. The acquisition section 12 may also recognize a moving object indicated by the difference between the frames as the athlete 32. The acquisition section 12 then calculates the position of the athlete 32 recognized in each frame for each frame. The acquisition section 12 then generates trajectory information by tracking the position of the athlete 32 in each frame. Note that the position of the athlete 32 may be calculated in three dimensions or in two dimensions. In the present embodiment, a description will be given of a case where the position coordinates (xₚ,yₚ) of the recognized athlete 32 on the xy-plane in a plan view of the skating rink 30 are calculated.

The acquisition section 12 selects the camera for identification 22 optimal for the position of the athlete 32 from among the cameras for identification 22 and acquires the image captured via the selected camera for identification 22. Specifically, the acquisition section 12 acquires an image captured via each of the first camera 22A and the second camera 22B in which the position at which the imaging direction of the first camera 22A and the imaging direction of the second camera 22B intersect is closest to the position of the athlete.

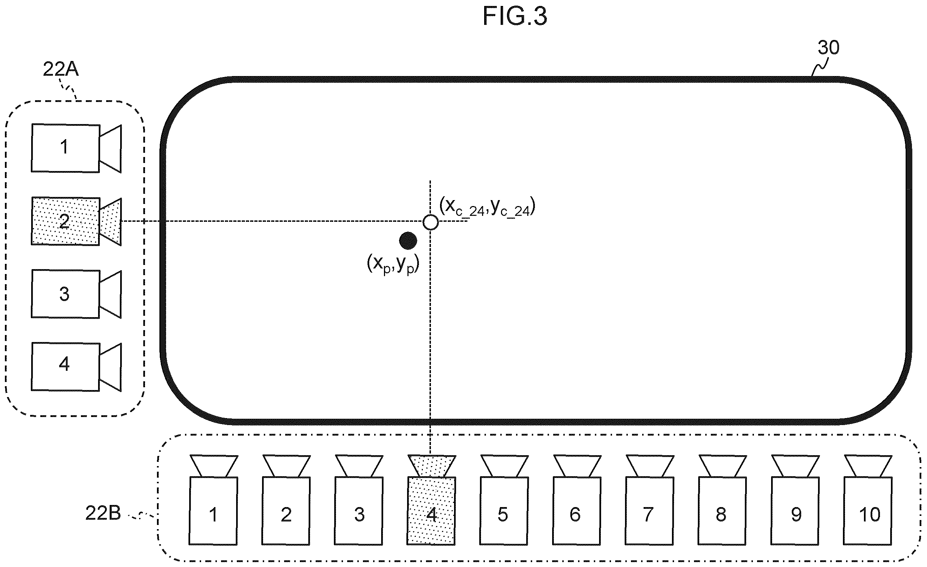

More specifically, the acquisition section 12 identifies the position coordinates (x_{c_ij},y_{c_ij}) closest to the position coordinates (xₚ,yₚ) of the athlete 32 calculated from the frame n of the image captured via the camera for tracking 20 from the position coordinates (x_{c_ij},y_{c_ij}) identified in advance. The acquisition section 12 then acquires a frame corresponding to the identified (x_{c_ij},y_{c_ij}) and having time information synchronized with the frame n of the image captured via each of the i-th first camera 22A and the j-th second camera B. For example, as illustrated in Fig. 3, it is assumed that the position coordinates closest to the position coordinates (xₚ,yₚ) of the athlete 32 are (x_{c_24},y_{c_24}). In this case, the acquisition section 12 acquires a frame of an image captured via each of the second first camera 22A and the fourth second camera 22B (cameras indicated by shading in Fig. 3).

The acquisition section 12 passes the acquired frame to the identification section 14 and passes the generated trajectory information to the calculation section 18.

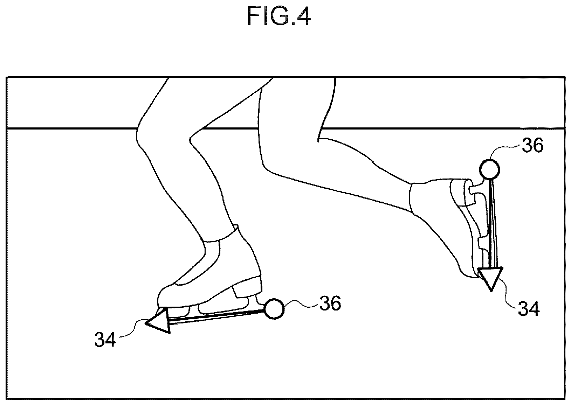

The identification section 14 identifies the height of a specified part in at least a portion of the athlete 32 and an attachment worn by the athlete 32 in each of the frames passed from the acquisition section 12. Specifically, the identification section 14 three-dimensionally analyzes each of the frames passed from the acquisition section 12, and calculates the three-dimensional position (x,y,z) of a specified part of the athlete 32 and an attachment worn by the athlete 32. Z is the height of the specified part. As illustrated in Fig. 4, the specified part includes a leading end 34 and a trailing end 36 of a blade of skating shoes worn by the athlete 32. The specified part may also include each joint, a head, and a facial part such as an eye, a nose, and a mouth of the athlete 32. Note that, as a method of recognizing these specified parts from each frame, an existing method such as a recognition method using the shape of the specified part or a recognition method using a human body skeleton model may be used. The identification section 14 passes the height z of the specified part calculated for each frame to the estimation section 16, and passes the three-dimensional position (x,y,z) of the specified part to the calculation section 18.

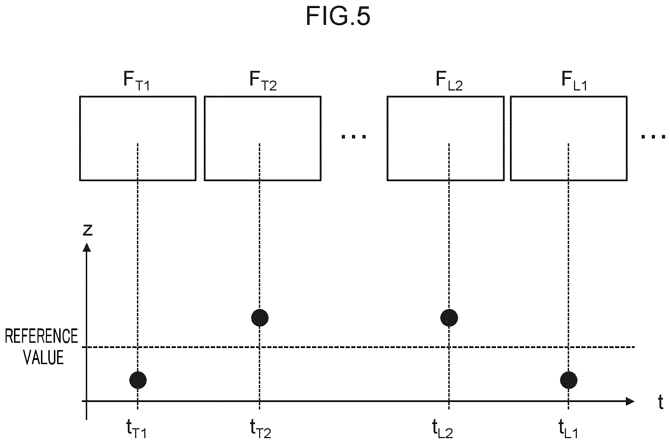

The estimation section 16 estimates, on the basis of the change in the height of the specified part identified for each frame, a time of takeoff-from-ice and a time of landing-on-ice of a jump performed by the athlete32, from a frame corresponding to the time of takeoff-from-ice and a frame corresponding to the time of landing-on-ice of the jump. Specifically, as illustrated in Fig. 5, the estimation section 16 estimates, as the time of takeoff-from-ice, time information of a frame in which the height of the specified part exceeds the reference value indicating the height at the time of landing-on-ice or a frame one frame before exceeding the reference value. The estimation section 16 also estimates, as the time of landing-on-ice, time information of a frame in which the height of the specified part returns to the reference value from the state exceeding the reference value or a frame one frame before returning to the reference value. The reference value may be, for example, a value obtained by adding a margin to the average of the height of a specified part identified in advance from an image in which it is known that the athlete 32 is in landing-on-ice.

In the example of Fig. 5, the height z of the specified part identified from the frame F_{T1} is less than or equal to the reference value, and the height z of the specified part identified from the next frame F_{T2} exceeds the reference value. Therefore, the time information t_{T1} of the frame F_{T1} or the time information t_{T2} of the frame F_{T2} is estimated as the time of takeoff-from-ice. The height z of the specified part identified from the frame F_{L2} exceeds the reference value, and the height z of the specified part identified from the next frame F_{L1} is less than or equal to the reference value. Therefore, the time information t_{L1} of the frame F_{L1} or the time information t_{L2} of the frame F_{L2} is estimated as the time of landing-on-ice. The estimation section 16 passes the estimated time of takeoff-from-ice and time of landing-on-ice to the calculation section 18.

The calculation section 18 calculates the absolute angle of the blade with the imaging direction of the camera for identification 22 as a reference by using the positions of the leading end 34 and the trailing end 36 of the blade identified from each of the frames at the time of takeoff-from-ice and time of landing-on-ice. For example, the calculation section 18 may calculate, as the absolute angle of the blade, an angle formed by the imaging direction of the camera for identification 22 or a line perpendicular to the imaging direction and a line connecting the leading end 34 and the trailing end 36 of the blade, that is, the orientation of the blade. Note that, in order to identify the leading end 34 and the trailing end 36 of the blade, frames captured via the first camera 22A and the second camera 22B as the camera for identification 22 are used. Therefore, the calculation section 18 may determine either one of the first camera 22A and the second camera 22B as the main camera for identification 22, and calculate the absolute angle of the blade with reference to the imaging direction of the main camera for identification 22.

The calculation section 18 also converts the absolute angle of the blade into an angle (hereinafter referred to as a "rotation angle θ") with respect to the reference line for determining the insufficient rotation of a jump. Specifically, the calculation section 18 identifies the position of each of a point A of takeoff-from-ice and a point B of landing-on-ice, on the basis of the trajectory information passed from the acquisition section 12 and each of the time of takeoff-from-ice and time of landing-on-ice passed from the estimation section 16. More specifically, in the trajectory information, the calculation section 18 identifies, as the point A of takeoff-from-ice, the position coordinates of the athlete 32 identified from the frame in which the time of takeoff-from-ice is used as time information, and identifies, as the point B of landing-on-ice, the position coordinates of the athlete 32 identified from the frame in which the time of landing-on-ice is used as time information.

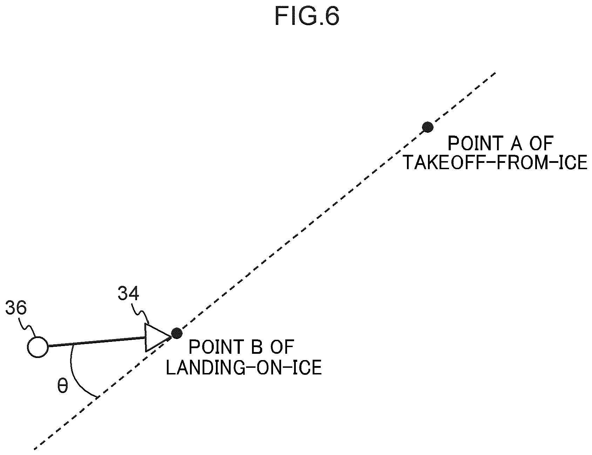

As illustrated in Fig. 6, the calculation section 18 then identifies a straight line passing through the point A of takeoff-from-ice and the point B of landing-on-ice as a reference line (A-B) for determining the rotation of the jump. The calculation section 18 calculates the rotation angle θ of the blade by subtracting the angular difference between the line with the imaging direction of the main camera for identification 22 as a reference and the identified reference line (A-B) from the absolute angle of the blade. The calculation section 18 outputs the rotation angle θ of the blade calculated from the frame of the time of landing-on-ice as the rotation angle θ of the blade at the time of landing-on-ice.

The calculation section 18 may also calculate information other than the rotation angle on the basis of the three-dimensional position of the specified part identified from each of a frame included in the interval from the time of takeoff-from-ice to the time of landing-on-ice (hereinafter also referred to as an "interval of jump") and a predetermined number of frames before and after the interval. For example, the calculation section 18 may calculate the position of the waist as the specified part and calculate, as the height of the jump, the difference between the minimum value and the maximum value of the position of the waist calculated from each frame included in the interval of jump. The calculation section 18 may also calculate the distance from the identified point A of takeoff-from-ice to the identified point B of landing-on-ice as the flight distance of the jump. The calculation section 18 may also calculate the rotation speed, from the time from the time of takeoff-from-ice to the time of landing-on-ice and the change in the rotation angle in the interval of jump. The calculation section 18 may also calculate the taking-off speed, from the time from a frame corresponding to the time of takeoff-from-ice to the time before a predetermined frame and the amount of change in the position of the specified part during the above times.

The calculation section 18 outputs a calculation result including the calculated rotation angle θ at the time of landing-on-ice and other calculated information. The output rotation angle θ at the time of landing-on-ice can be used for determination of insufficient rotation or the like of a jump. The output calculation result may also be used as stats to be displayed on a screen of a television broadcast or the like. For example, the calculation section 18 may also generate and output image data of an image 38 (see Fig. 1) indicating an interval of jump on the trajectory indicated by the trajectory information.

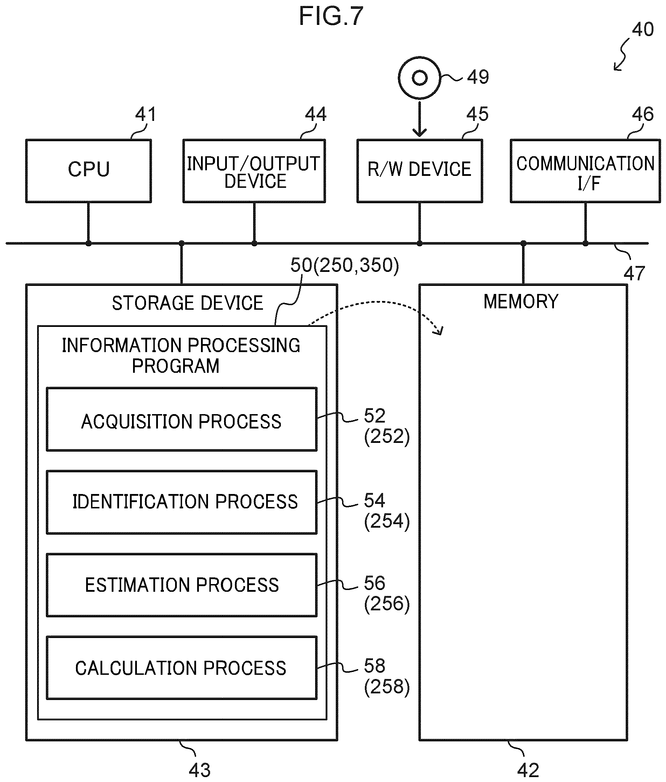

The information processing device 10 may be implemented by, for example, a computer 40 illustrated in Fig. 7. The computer 40 includes a central processing unit (CPU) 41, a memory 42 serving as a temporary storage area, and a nonvolatile storage device 43. The computer 40 also includes an input/output device 44 such as an input device and a display device, and a read/write (R/W) device 45 that controls reading and writing of data from and to a storage medium 49. The computer 40 also includes a communication interface (I/F) 46 connected to a network such as the Internet. The CPU 41, the memory 42, the storage device 43, the input/output device 44, the R/W device 45, and the communication I/F 46 are connected to each other via a bus 47.

The storage device 43 may be implemented by a hard disk drive (HDD), a solid state drive (SSD), a flash memory, or the like. The storage device 43 serving as a storage medium stores an information processing program 50 for causing the computer 40 to function as the information processing device 10. The information processing program 50 includes an acquisition process 52, an identification process 54, an estimation process 56, and a calculation process 58.

The CPU 41 reads the information processing program 50 from the storage device 43, expands the information processing program in the memory 42, and sequentially executes the processes included in the information processing program 50. The CPU 41 operates as the acquisition section 12 illustrated in Fig. 2 by executing the acquisition process 52. The CPU 41 also operates as the identification section 14 illustrated in Fig. 2 by executing the identification process 54. The CPU 41 also operates as the estimation section 16 illustrated in Fig. 2 by executing the estimation process 56. The CPU 41 also operates as the calculation section 18 illustrated in Fig. 2 by executing the calculation process 58. Thus, the computer 40 that executes the information processing program 50 functions as the information processing device 10. Note that The CPU 41 that executes the program is hardware.

Note that the functions implemented by the information processing program 50 can also be implemented by, for example, a semiconductor integrated circuit, more specifically, an application specific integrated circuit (ASIC) or the like.

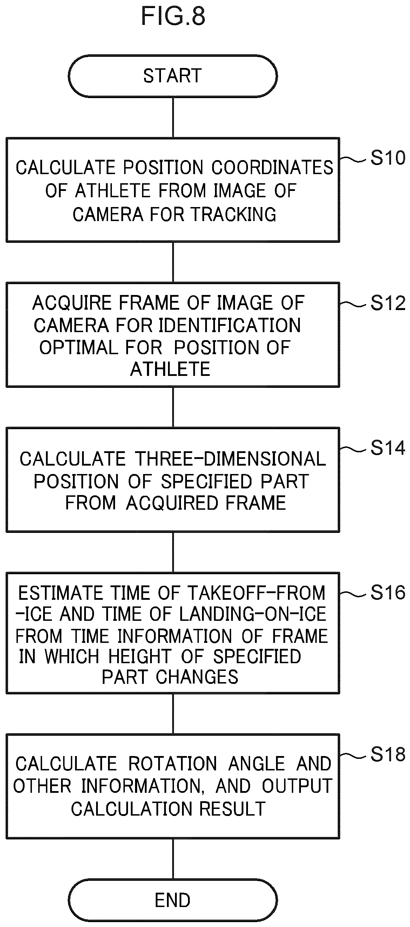

The operation of the information processing system 100 according to the first embodiment will now be described. When the image captured via each of the camera for tracking 20 and the camera for identification 22 is input to the information processing device 10, an information processing routine illustrated in Fig. 8 is executed in the information processing device 10. Note that the information processing routine is an example of an information processing method of the disclosed technique.

In Step S 10, the acquisition section 12 acquires an image output from the camera for tracking 20. The acquisition section 12 then calculates, from the acquired image, the position coordinates of the athlete 32 on the xy-plane in a plan view of the skating rink 30 by motion tracking.

In Step S 12, the acquisition section 12 then acquires a frame of an image captured via each of the first camera 22A and the second camera 22B in which the position at which the imaging direction of the first camera 22A and the imaging direction of the second camera 22B intersect is closest to the position of the athlete.

In Step S14, the identification section 14 then three-dimensionally analyzes each of the frames acquired in Step S12 described above, and calculates the three-dimensional position of a specified part of the athlete 32 and the attachment worn by the athlete 32. Thus, the height of the specified parts is identified.

In Step S16, the estimation section 16 then estimates, as the time of takeoff-from-ice, time information of a frame in which the height of the specified part identified in Step S14 described above exceeds the reference value indicating the height at the time of landing-on-ice or a frame one frame before exceeding the reference value. The estimation section 16 also estimates, as the time of landing-on-ice, time information of a frame in which the height of the specified part returns to the reference value from the state exceeding the reference value or a frame one frame before returning to the reference value.

In Step S 18, the calculation section 18 then calculates the absolute angle of the blade with the imaging direction of the camera for identification 22 as a reference by using the positions of the leading end 34 and the trailing end 36 of the blade identified from each of the frames at the time of takeoff-from-ice and time of landing-on-ice. The calculation section 18 also identifies the position of each of the point A of takeoff-from-ice and the point B of landing-on-ice, on the basis of the trajectory information passed from the acquisition section 12 and each of the time of takeoff-from-ice and time of landing-on-ice passed from the estimation section 16. The calculation section 18 then identifies the straight line passing through the point A of takeoff-from-ice and the point B of landing-on-ice as the reference line (A-B), and calculates the rotation angle θ of the blade by subtracting the angular difference between the line with the imaging direction of the main camera for identification 22 as a reference and the identified reference line (A-B) from the absolute angle of the blade. Further, the calculation section 18 calculates information such as a height of a jump, a flight distance, and a taking-off speed, on the basis of the three-dimensional position of the specified part identified from each of a predetermined number of frames during an interval of jump and before and after the interval. The calculation section 18 then outputs the calculation results of the rotation angle θ and other information, and the information processing routine ends.

As described above, according to the information processing system of the first embodiment, the information processing device acquires an image captured via each of a plurality of cameras that images an athlete on a skating rink from two intersecting directions. The information processing device also identifies the height of a specified part in at least a portion of the athlete and the attachment worn by the athlete in each of the plurality of frames included in the acquired image. The information processing device then estimates, on the basis of the change in the height of the specified part, a time of takeoff-from-ice and a time of landing-on-ice of a jump performed by the athlete, from a frame corresponding to the time of takeoff-from-ice and a frame corresponding to the time of landing-on-ice of the jump. Thus, it is possible to estimate the time of takeoff-from-ice and the time of landing-on-ice of a jump in figure skating without attaching a sensor or the like to an athlete and an the attachment worn by the athlete.

In addition, since the information processing device estimates the time of takeoff-from-ice and the time of landing-on-ice of a jump on the basis of the image captured via each of the plurality of cameras that images the athlete from two intersecting directions, the information processing device can accurately estimate the time of takeoff-from-ice and the time of landing-on-ice. Further, the information processing device can also accurately calculate information such as a rotation angle at the time of landing-on-ice of a jump on the basis of the accurately estimated time of takeoff-from-ice and time of landing-on-ice.

### <Second Embodiment>

A second embodiment will now be described. Note that, in the information processing system according to the second embodiment, the same components as those of the information processing system 100 according to the first embodiment are denoted by the same reference numerals, and the detailed description thereof will be omitted. In the second embodiment, regarding the functional sections having the same last two digits of the reference numerals as the functional sections of the first embodiment, the detailed description of the functions common to the functional sections of the first embodiment will be omitted.

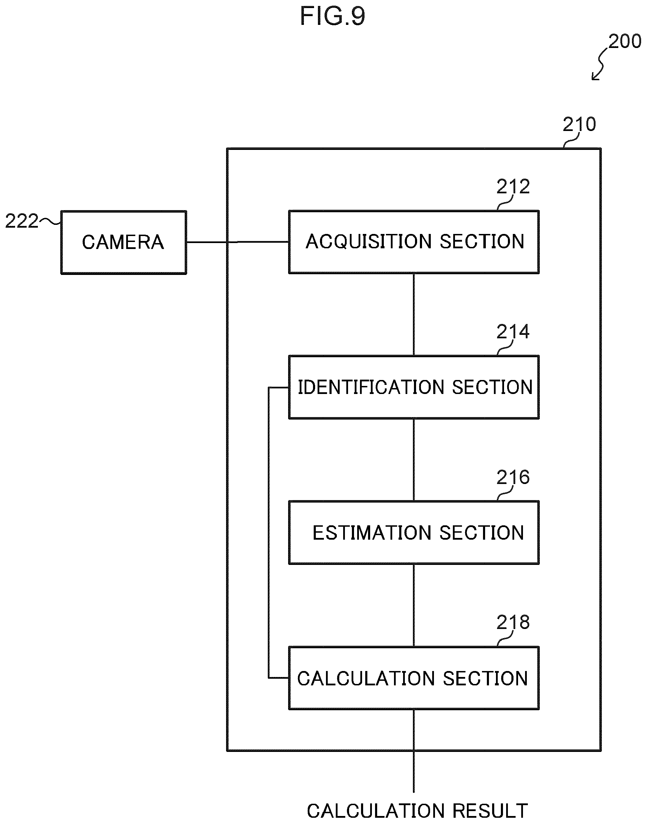

As illustrated in Fig. 9, the information processing system 200 according to the second embodiment includes an information processing device 210 and a camera 222.

As in the camera for identification 22 in the first embodiment, the camera 222 is also an imaging device that images an image so as to be able to identify the three-dimensional position of the specified part of the athlete 32 on the skating rink 30 and the attachment worn by the athlete 32. A plurality of (e.g., two) cameras 222 is installed at positions at which the three-dimensional position of the specified part described above can be measured by a stereo-camera method. The camera 222 outputs an image captured at a predetermined frame rate (e.g., 120 fps). The output image includes a plurality of frames, and time information is associated with each frame. Note that, as the camera 222, one camera with time-of-flight (ToF) method may be used. As in the camera for tracking 20 in the first embodiment, the camera 222 also functions as, for example, an imaging device for motion tracking that images an image capable of identifying the position of the athlete 32 on the skating rink 30.

As illustrated in Fig. 9, the information processing device 210 functionally includes an acquisition section 212, an identification section 214, an estimation section 216, and a calculation section 218.

The acquisition section 212 acquires an image output from the camera 222. The acquisition section 212 passes the acquired image to the identification section 214.

The identification section 214 identifies the height of the blade of the skating shoes worn by the athlete 32 in each of the plurality of frames included in the image passed from the acquisition section 212. Specifically, the identification section 214 calculates the three-dimensional positions (x,y,z) of the leading end 34 and the trailing end 36 of the blade as illustrated in Fig. 4, as in the identification section 14 in the first embodiment. The same trajectory information as the trajectory information of the athlete 32 calculated by the acquisition section 12 of the first embodiment is calculated by the three-dimensional position (x,y). The three-dimensional position z corresponds to the height of the leading end 34 or the trailing end 36 of the blade (hereinafter also simply referred to as a "blade"). The identification section 214 may also calculate the three-dimensional position (x,y,z) of a specified part other than the blade, as in the identification section 14 in the first embodiment. The identification section 214 passes the height z of the blade to the estimation section 216, and passes the three-dimensional positions (x,y,z) of the blade and other specified parts and the trajectory information to the calculation section 218.

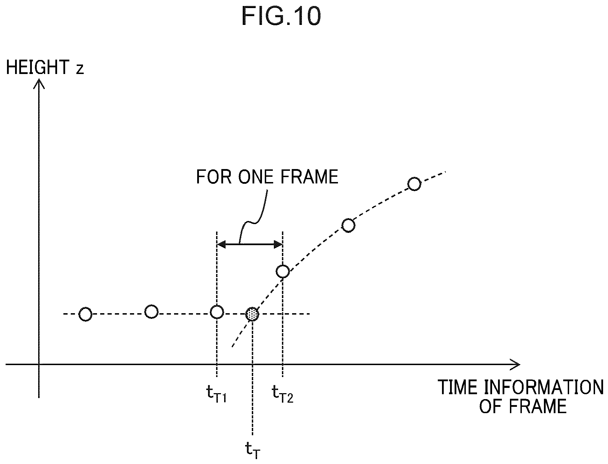

The estimation section 216 estimates the time of takeoff-from-ice and the time of landing-on-ice of a jump, on the basis of the change in the height of the blade and the time information of each of the plurality of frames which are passed from the identification section 214. Specifically, as illustrated in Fig. 10, the estimation section 216 estimates, as the time of takeoff-from-ice, a time corresponding to a change point at which the degree of change in the height of the blade with respect to the time information of each of the plurality of frames changes from a state within a predetermined value to a state exceeding the predetermined value. The predetermined value may be set in advance to a value indicating that there is almost no change in the height of the blade, that is, a value that can determine that the athlete 32 is in the state of landing-on-ice.

A more specific description will be given using the example of Fig. 10. In the example of Fig. 10, the change in the height z of the blade is within a predetermined value up to the time information t_{T1}, and the change in the height z exceeds the predetermined value after the time information t_{T2}. The estimation section 216 detects, as a change point, an intersection between a straight line obtained by approximating the height z up to the time information t_{T1} at which the change in the height z of the blade is within a predetermined value by a straight line and an upward convex curve obtained by approximating the height z after the time information t_{T2} at which the change in the height z exceeds the predetermined value by a curve. The estimation section 216 then estimates the time information t_{T} corresponding to the change point as the time of takeoff-from-ice.

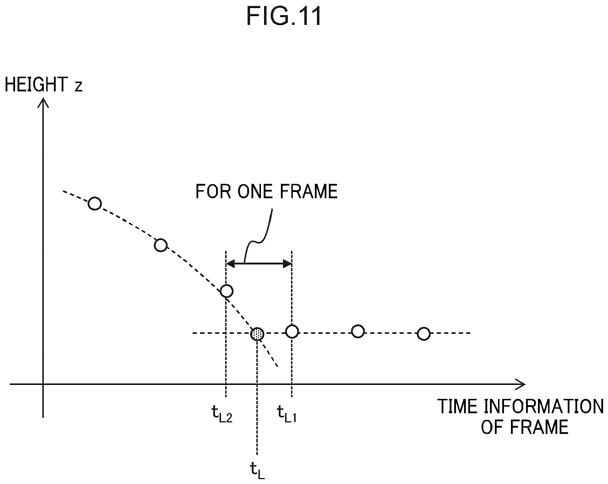

As also for the time of landing-on-ice, as illustrated in Fig. 11, the estimation section 216 estimates, as the time of landing-on-ice, a time corresponding to a change point at which the degree of change in the height of the blade changes from a state exceeding a predetermined value to a state within the predetermined value.

A more specific description will be given using the example of Fig. 11. In the example of Fig. 11, the change in the height z of the blade exceeds a predetermined value up to the time information t_{L2}, and the change in the height z is within the predetermined value after the time information t_{L1}. The estimation section 216 detects, as a change point, an intersection between an upward convex curve obtained by approximating the height z up to the time information t_{L2} at which the change in the height z of the blade exceeds the predetermined value by a curve and a straight line obtained by approximating the height z after the time information t_{L1} at which the change in the height z is within the predetermined value by a straight line. The estimation section 216 then estimates the time information t_{L} corresponding to the change point as the time of landing-on-ice.

When the time information of a frame is estimated as the time of takeoff-from-ice as in the first embodiment, even if the actual timing of takeoff-from-ice is between frames, the time information of a frame before or after the timing is estimated as the time of takeoff-from-ice. The same applies to the time of landing-on-ice. As described above, by detecting the change point of the change in the height of the blade, the time of takeoff-from-ice and the time of landing-on-ice can be estimated in more detail than the time interval between frames. The estimation section 216 passes the estimated time of takeoff-from-ice and time of landing-on-ice to the calculation section 218.

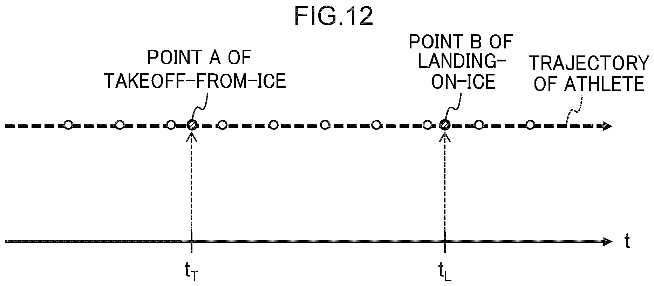

The calculation section 218 calculates the rotation angle θ for each frame, as in the calculation section 18 in the first embodiment. At this point, as illustrated in Fig. 12, the calculation section 218 identifies, on the basis of the trajectory information of the athlete 32 generated by the identification section 214, the position of the athlete 32 calculated from each of the frames corresponding to the time information immediately before and immediately after the time t_{T} of takeoff from-ice estimated by the estimation section 216. The calculation section 218 then identifies, as the point A of takeoff-from-ice, a position corresponding to the time t_{T} of takeoff-from-ice between the both identified positions. Note that, in Fig. 12, for convenience of description, the trajectory of the position of the athlete 32 is represented by a straight line corresponding to the time axis.

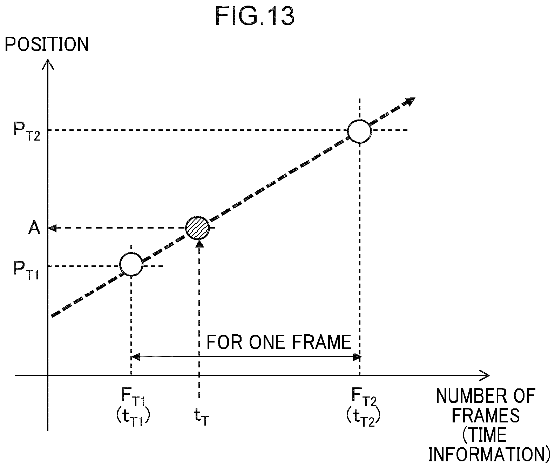

More specifically, as illustrated in Fig. 13, the calculation section 218 sets the frame corresponding to the time information t_{T1} immediately before the time t_{T} of takeoff-from-ice as F_{T1}, and sets the frame corresponding to the time information t_{T2} immediately after the time t_{T} of takeoff-from-ice as F_{T2}. The calculation section 218 also assumes that the position of the athlete 32 calculated from the frame F_{T1} is P_{T1}, the position of the athlete 32 calculated from the frame F_{T2} is P_{T2}, and the position of the athlete 32 linearly changes between P_{T1} and P_{T2}. In this case, the calculation section 218 identifies, as the point A of takeoff-from-ice, a position between P_{T1} and P_{T2} and corresponding to the ratio of t_{T} with respect to the time (t_{T2}-t_{T1}) for one frame. In other words, the calculation section 218 identifies the point A of takeoff-from-ice by A = P_{T1} + (P_{T2}-P_{T1}) × (t_{T}-t_{T1})/(t_{T2}-t_{T1}). The calculation section 218 also identifies the point B of landing-on-ice, which is a position corresponding to the time t_{L} of landing-on-ice, in the same manner as the above-described point A of takeoff-from-ice. Thus, the point A of takeoff-from-ice and the point B of landing-on-ice can be identified more accurately than in the case of the first embodiment.

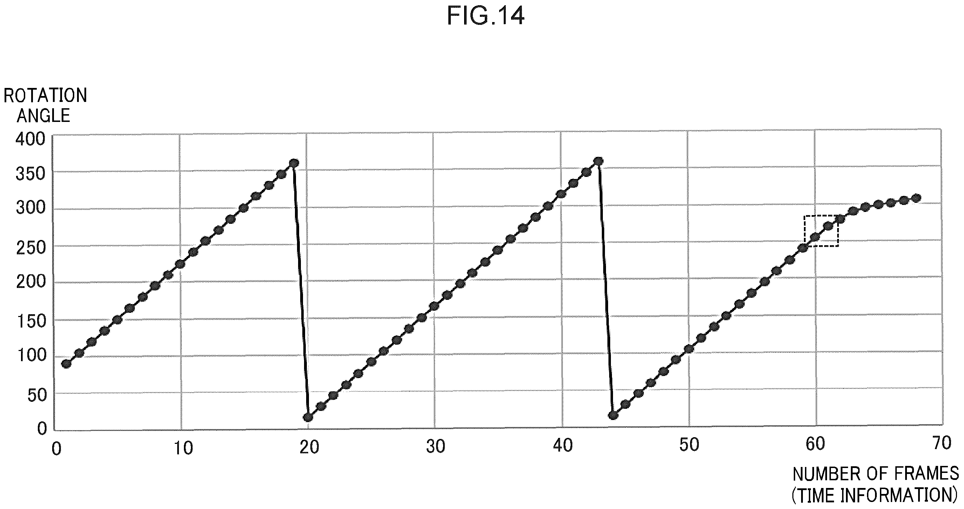

The calculation section 218 identifies a straight line passing through the identified point A of takeoff-from-ice and point B of landing-on-ice as the reference line (A-B) for determining the rotation of the jump, and calculates the rotation angle θ from each of the frames included in the interval of jump as in the first embodiment. Fig. 14 illustrates an example of the rotation angle θ calculated from each of the frames included in the interval of jump. Further, the calculation section 218 calculates the rotation angle θ at the time of landing-on-ice on the basis of the rotation angles θ calculated from the frames before and after the time of landing-on-ice estimated by the estimation section 216.

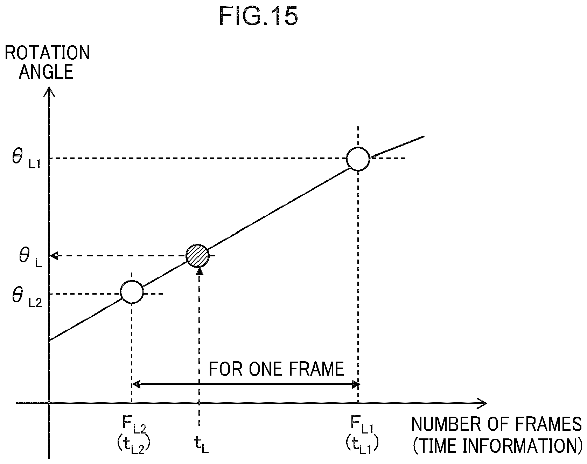

A specific description will be given with reference to Fig. 15. Fig. 15 is an enlarged view of a portion indicated by a broken line frame in Fig. 14. A frame corresponding to the time information t_{L2} immediately before the time t_{L} of landing-on-ice estimated by the estimation section 216 is set as F_{L2}, and a frame corresponding to the time information t_{L1} immediately after the time t_{L} of landing-on-ice is set as F_{L1}. The calculation section 218 also assumes that the rotation angle of the blade calculated from the frame F_{L1} is θ_{L1}, the rotation angle calculated from the frame F_{L2} is θ_{L2}, and the rotation speed during a jump is substantially constant. The calculation section 218 then calculates, as the rotation angle θ_{L} at the time t_{L} of landing-on-ice, a rotation angle between θ_{L1} and θ_{L2} and corresponding to the ratio of t_{L} with respect to the time (t_{L1}-t_{L2}) for one frame. In other words, the calculation section 218 calculates the rotation angle θ_{L} by θ_{L} = θ_{L2} + (θ_{L1}-θ_{L2}) × (t_{L}-t_{L2})/(t_{L1}-t_{L2}). Thus, the rotation angle can be calculated more accurately than in the case of the first embodiment.

As in the calculation section 18 in the first embodiment, the calculation section 218 also calculates information other than the rotation angle and outputs the calculation result.

The information processing device 210 may be implemented by, for example, the computer 40 illustrated in Fig. 7. The storage device 43 of the computer 40 stores an information processing program 250 for causing the computer 40 to function as the information processing device 210. The information processing program 250 includes an acquisition process 252, an identification process 254, an estimation process 256, and a calculation process 258.

The CPU 41 reads the information processing program 250 from the storage device 43, expands the information processing program in the memory 42, and sequentially executes the processes included in the information processing program 250. The CPU 41 operates as the acquisition section 212 illustrated in Fig. 9 by executing the acquisition process 252. The CPU 41 also operates as the identification section 214 illustrated in Fig. 9 by executing the identification process 254. The CPU 41 also operates as the estimation section 216 illustrated in Fig. 9 by executing the estimation process 256. The CPU 41 also operates as the calculation section 218 illustrated in Fig. 9 by executing the calculation process 258. Thus, the computer 40 that executes the information processing program 250 functions as the information processing device 210.

Note that the functions implemented by the information processing program 250 can be implemented by, for example, a semiconductor integrated circuit, more specifically, an ASIC or the like.

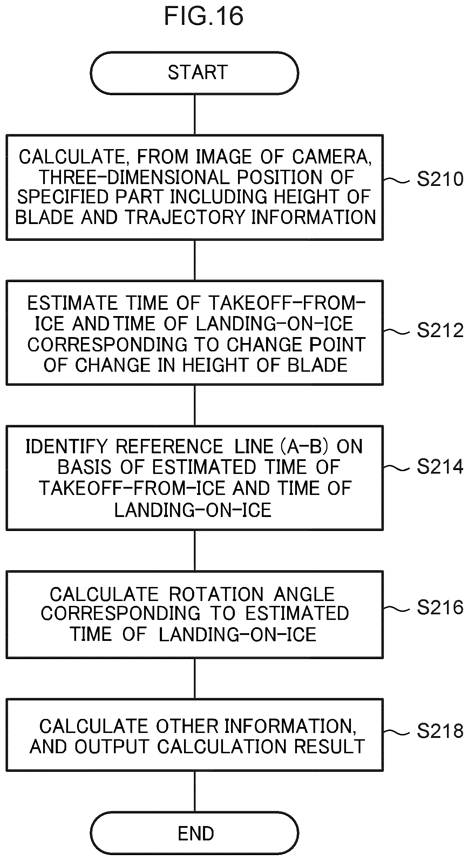

The operation of the information processing system 200 according to the second embodiment will now be described. In the second embodiment, an information processing routine illustrated in Fig. 16 is executed in the information processing device 210. Note that the information processing routine is an example of an information processing method of the disclosed technique.

In Step S210, the acquisition section 212 acquires an image output from the camera 222 and passes the image to the identification section 214. The identification section 214 then calculates the three-dimensional position (x,y,z) of the specified part including the blade of the skating shoes worn by the athlete 32 in each of the plurality of frames included in the image passed from the acquisition section 212. The three-dimensional position (x,y,z) includes trajectory information and the height of the blade of the athlete 32.

In Step S212, the estimation section 216 then estimates, as the time of takeoff-from-ice, a time corresponding to a change point at which the degree of change in the height of the blade with respect to the time information of each of the plurality of frames changes from a state within a predetermined value to a state exceeding the predetermined value. As also for the time of landing-on-ice, the estimation section 216 estimates, as the time of landing-on-ice, a time corresponding to a change point at which the degree of change in the height z of the blade changes from a state exceeding a predetermined value to a state within the predetermined value.

In Step S214, the calculation section 218 then identifies, on the basis of the trajectory information of the athlete 32, the position of the athlete 32 calculated from each of the frames corresponding to the time information immediately before and immediately after the estimated time of takeoff-from-ice. The calculation section 218 then identifies, as the point A of takeoff-from-ice, a position corresponding to the time of takeoff-from-ice between the both identified positions. Similarly, the calculation section 218 identifies the position of the athlete 32 calculated from each of the frames corresponding to the time information immediately before and immediately after the estimated time of landing-on-ice. The calculation section 218 then identifies, as the point B of landing-on-ice, a position corresponding to the time of landing-on-ice between the both identified positions. Further, the calculation section 218 identifies a straight line passing through the identified point A of takeoff-from-ice and point B of landing-on-ice as a reference line (A-B) for determining the rotation of the jump.

In Step S216, the calculation section 218 then calculates the rotation angle θ from each of the frames included in the interval of jump using the identified reference line (A-B). The calculation section 218 then calculates the rotation angle corresponding to the time of landing-on-ice between the rotation angles calculated from each of the frames corresponding to the time information immediately before and immediately after the estimated time of landing-on-ice.

In Step S218, the calculation section 218 then also calculates information other than the rotation angle, and outputs the calculation result together with the rotation angle calculated in Step S216 described above, and the information processing routine ends.

As described above, according to the information processing system of the second embodiment, the information processing device acquires an image captured via a camera that images an athlete on a skating rink. The information processing device also identifies the height of the blade of the skating shoes worn by the athlete in each of the plurality of frames included in the acquired image. The information processing device then estimates the time of takeoff-from-ice and time of landing-on-ice of a jump on the basis of the change in the height of the blade and the time information of each of the plurality of frames. Thus, it is possible to estimate the time of takeoff-from-ice and the time of landing-on-ice of a jump in figure skating without attaching a sensor or the like to an athlete and an attachment worn by the athlete.

The information processing device also detects a change point of a change in the height of the blade and estimates time information corresponding to the change point as the time of takeoff-from-ice and the time of landing-on-ice, and thus can estimate the time of takeoff-from-ice and the time of landing-on-ice in more detail than the time interval between frames. Further, the information processing device can accurately calculate information such as a rotation angle at the time of landing-on-ice of a jump on the basis of the time of takeoff-from-ice and the time of landing-on-ice estimated in detail.

### <Third Embodiment>

A third embodiment will now be described. Note that, in the information processing system according to the third embodiment, the same components as those of the information processing system 100 according to the first embodiment and the information processing system 100 according to the second embodiment are denoted by the same reference numerals, and the detailed description thereof will be omitted.

As illustrated in Figs. 1 and 2, an information processing system 300 according to the third embodiment includes an information processing device 310, a camera for tracking 20, and a camera for identification 22. As illustrated in Fig. 2, the information processing device 310 functionally includes the acquisition section 12, the identification section 14, an estimation section 216, and a calculation section 218. In other words, the information processing device 310 according to the third embodiment has a configuration in which the information processing device 10 according to the first embodiment and the information processing device 210 according to the second embodiment are combined.

Specifically, as in the first embodiment, the information processing device 310 selects the optimal camera for identification 22 from the plurality of cameras for identification 22 on the basis of the position of the athlete 32 acquired from the image captured via the camera for tracking 20. The information processing device 310 then calculates the three-dimensional position of a specified part including the blade from the image captured via the selected camera for identification 22. Thus, the height of the blade is also identified. Further, the information processing device 310 detects a change point of the change in the height of the blade and estimates time information corresponding to the change point as the time of takeoff-from-ice and the time of landing-on-ice.

The information processing device 310 may be implemented by, for example, the computer 40 illustrated in Fig. 7. The storage device 43 of the computer 40 stores an information processing program 350 for causing the computer 40 to function as the information processing device 310. The information processing program 350 includes an acquisition process 52, an identification process 54, an estimation process 256, and a calculation process 258.

The CPU 41 reads the information processing program 350 from the storage device 43, expands the information processing program in the memory 42, and sequentially executes the processes included in the information processing program 350. The CPU 41 operates as the acquisition section 12 illustrated in Fig. 2 by executing the acquisition process 52. The CPU 41 also operates as the identification section 14 illustrated in Fig. 2 by executing the identification process 54. The CPU 41 also operates as the estimation section 216 illustrated in Fig. 2 by executing the estimation process 256. The CPU 41 also operates as the calculation section 218 illustrated in Fig. 2 by executing the calculation process 258. Thus, the computer 40 that executes the information processing program 350 functions as the information processing device 310.

Note that the functions implemented by the information processing program 350 can be implemented by, for example, a semiconductor integrated circuit, more specifically, an ASIC or the like.

The operation of the information processing system 200 according to the third embodiment will now be described. In the third embodiment, in the information processing device 210, Steps S10 to S14 of the information processing routine illustrated in Fig. 8 and Steps S212 to S218 of the information processing routine illustrated in Fig. 16 are executed.

As described above, according to the information processing system of the third embodiment, the time of takeoff-from-ice and the time of landing-on-ice of a jump in figure skating can be more accurately estimated by the configuration in which the first embodiment and the second embodiment are combined.

Note that the first and third embodiments have described a case where an optimal camera for identification 22 is selected from the plurality of cameras for identification 22 on the basis of the position of the athlete 32 acquired from the image captured via the camera for tracking 20 for each frame, but are not limited thereto. Approximate time of takeoff-from-ice and time of landing-on-ice may be acquired from the image captured via the camera for tracking 20, and an optimal camera for identification 22 may be selected for a frame corresponding to the approximate time of takeoff-from-ice and time of landing-on-ice.

Specifically, the information processing device acquires the three-dimensional position including the position in the height direction of a specified part of the athlete 32 from each frame of the image captured via the camera for tracking 20. The information processing device then acquires, as an approximate time of takeoff-from-ice, time information of a frame in which the height of the specified part exceeds the reference value indicating the height at the time of landing-on-ice or a frame one frame before exceeding the reference value. The information processing device also acquires, as an approximate time of landing-on-ice, time information of a frame in which the height of the specified part returns to the reference value from the state exceeding the reference value or a frame one frame before returning to the reference value. The information processing device then identifies an interval from a frame a predetermined number of frames before the frame corresponding to the approximate time of takeoff-from-ice to a frame a predetermined number of frames after the frame corresponding to the approximate time of landing-on-ice. On the basis of the position of the athlete 32 on the skating rink 30 acquired from each frame included in the identified interval, the information processing device then selects an appropriate camera for identification 22 for each frame included in the interval as described with reference to Fig. 3. Thus, it is possible to limit the selection of the optimal camera for identification 22 and the execution of the processing on the image captured via the camera for identification 22 to the interval of jump, and to reduce the amount of processing.

The above-described embodiments have described the aspect in which the information processing program is stored (installed) in the storage device in advance, but are not limited thereto. The program according to the disclosed technique may also be provided in a form stored in a storage medium such as a CD-ROM, a DVD-ROM, or a USB memory.

### Explanation of Reference Numerals

- 100, 200: Information processing system
- 10, 210, 310: Information processing device
- 12, 212: Acquisition section
- 14, 214: Identification section
- 16, 216: Estimation section
- 18, 218: Calculation section
- 20: Camera for tracking
- 22: Camera for identification
- 22A: First camera
- 22B: Second camera
- 222: Camera
- 30: Skating rink
- 32: Athlete
- 34: Leading end of blade
- 36: Trailing end of blade
- 40: Computer
- 41: CPU
- 42: Memory
- 43: Storage device
- 49: Storage medium
- 50, 250, 350: Information processing program

## Claims

1. An information processing program that is executable by a computer to perform processing, the processing comprising:
acquiring an image captured via each of a plurality of cameras that images an athlete on a skating rink from two intersecting directions;
identifying a height of a part, in at least a portion of the athlete and an attachment worn by the athlete, in each of a plurality of frames included in the image; and
based on a change in the height, estimating a time of takeoff-from-ice and a time of landing-on-ice of a jump performed by the athlete, from a frame corresponding to the time of takeoff-from-ice and a frame corresponding to the time of landing-on-ice of the jump.

2. The information processing program of claim 1, wherein acquiring the image includes acquiring an image captured via each of, from among a plurality of first cameras having an imaging direction that is parallel to a long axis direction of the skating rink and a plurality of second cameras having another imaging direction that is parallel to a short axis direction of the skating rink, a first camera and a second camera for which a position at which an imaging direction of the first camera and an imaging direction of the second camera intersect is closest to a position of the athlete..

3. The information processing program of claim 1 or 2, wherein estimating the time of takeoff-from-ice and the time of landing-on-ice includes estimating, as the time of takeoff-from-ice, time information of a frame in which the height of the part exceeds a reference value indicating a height at a time of landing-on-ice or a frame one frame before exceeding the reference value, and estimating, as the time of landing-on-ice, time information of a frame in which the height of the part returns to the reference value from a state exceeding the reference value or a frame one frame before returning to the reference value.

4. The information processing program of any one of claims 1 to 3, wherein the part is a blade of skating shoes worn by the athlete.

5. An information processing program that is executable by a computer to perform processing, the processing comprising:
acquiring an image captured via a camera that images an athlete on a skating rink;
identifying a height of a blade of skating shoes worn by the athlete in each of a plurality of frames included in the image; and
based on a change in the height, and time information of each of the plurality of frames, estimating a time of takeoff-from-ice and a time of landing-on-ice of a jump performed by the athlete.

6. The information processing program of claim 5, wherein estimating the time of takeoff-from-ice includes estimating, as the time of takeoff-from-ice, a time corresponding to a change point at which a degree of change in the height with respect to time information of each of the plurality of frames changes, from a state within a predetermined value to a state exceeding the predetermined value, and estimating the time of landing-on-ice includes estimating, as the time of landing-on-ice, a time corresponding to a change point at which the degree of change in the height changes from a state exceeding the predetermined value to a state within the predetermined value.

7. The information processing program of claim 5 or 6, wherein acquiring the image includes acquiring an image captured via each of a plurality of cameras that images the athlete from two intersecting directions.

8. The information processing program of claim 7, wherein acquiring the image includes acquiring an image captured via each of, from among a plurality of first cameras having an imaging direction that is parallel to a long axis direction of the skating rink and a plurality of second cameras having another imaging direction that is parallel to a short axis direction of the skating rink, a first camera and a second camera for which a position at which an imaging direction of the first camera and an imaging direction of the second camera intersect is closest to a position of the athlete.

9. The information processing program of any one of claims 4 to 8, wherein the processing further comprises calculating an angle of the blade with respect to a reference line based on an orientation of the blade at each of the time of takeoff-from-ice and the time of landing-on-ice.

10. The information processing program of claim 9, wherein an angle of the blade at the time of landing-on-ice is calculated based on angles calculated from frames before and after the time of landing-on-ice.

11. The information processing program of any one of claims 1 to 10, wherein a taking-off speed, a height of a jump, a flight distance, a rotation speed, or a combination thereof, is calculated based on a three-dimensional position of the part, in at least a portion of the athlete and an attachment worn by the athlete, in each frame from a frame a predetermined number of frames before a frame corresponding to the time of takeoff-from-ice to a frame a predetermined number of frames after a frame corresponding to the time of landing-on-ice.

12. An information processing device comprising:
an acquisition section that acquires an image captured via each of a plurality of cameras that images an athlete on a skating rink, from two intersecting directions;
an identification section that identifies a height of a part, in at least a portion of the athlete and an attachment worn by the athlete, in each of a plurality of frames included in the image; and
an estimation section that, based on a change in the height, estimates a time of takeoff-from-ice and a time of landing-on-ice of a jump performed by the athlete, from a frame corresponding to the time of takeoff-from-ice and a frame corresponding to the time of landing-on-ice of the jump.

13. The information processing device of claim 12, wherein the acquisition section acquires an image captured via each of, from among a plurality of first cameras having an imaging direction that is parallel to a long axis direction of the skating rink and a plurality of second cameras having another imaging direction that is parallel to a short axis direction of the skating rink, a first camera and a second camera for which a position at which an imaging direction of the first camera and an imaging direction of the second camera intersect is closest to a position of the athlete.

14. The information processing device of claim 12 or 13, wherein the estimation section estimates, as the time of takeoff-from-ice, time information of a frame in which the height of the part exceeds a reference value indicating a height at a time of landing-on-ice or a frame one frame before exceeding the reference value, and estimates, as the time of landing-on-ice, time information of a frame in which the height of the part returns to the reference value from a state exceeding the reference value or a frame one frame before returning to the reference value.

15. An information processing device comprising:
an acquisition section that acquires an image captured via a camera that images an athlete on a skating rink;
an identification section that identifies a height of a blade of skating shoes worn by the athlete in each of a plurality of frames included in the image; and
an estimation section that, based on a change in the height, and time information of each of the plurality of frames, estimates a time of takeoff-from-ice and a time of landing-on-ice of a jump performed by the athlete.

16. The information processing device of claim 15, wherein the estimation section estimates, as the time of takeoff-from-ice, a time corresponding to a change point at which a degree of change in the height with respect to time information of each of the plurality of frames changes, from a state within a predetermined value to a state exceeding the predetermined value, and estimates, as the time of landing-on-ice, a time corresponding to a change point at which the degree of change in the height changes from a state exceeding the predetermined value to a state within the predetermined value.

17. An information processing method that, by a computer, executes processing, the processing comprising:
acquiring an image captured via each of a plurality of cameras that images an athlete on a skating rink from two intersecting directions;
identifying a height of a part, in at least a portion of the athlete and an attachment worn by the athlete, in each of a plurality of frames included in the image; and
based on a change in the height, estimating a time of takeoff-from-ice and a time of landing-on-ice of a jump performed by the athlete, from a frame corresponding to the time of takeoff-from-ice and a frame corresponding to the time of landing-on-ice of the jump.

18. An information processing method that, by a computer, executes processing, the processing comprising:
acquiring an image captured via a camera that images an athlete on a skating rink;
identifying a height of a blade of skating shoes worn by the athlete in each of a plurality of frames included in the image; and
based on a change in the height, and time information of each of the plurality of frames, estimating a time of takeoff-from-ice and a time of landing-on-ice of a jump performed by the athlete.

19. A recording medium storing an information processing program that is executable by a computer to perform processing, the processing comprising:
acquiring an image captured via each of a plurality of cameras that images an athlete on a skating rink from two intersecting directions;
identifying a height of a part, in at least a portion of the athlete and an attachment worn by the athlete, in each of a plurality of frames included in the image; and
based on a change in the height, estimating a time of takeoff-from-ice and a time of landing-on-ice of a jump performed by the athlete, from a frame corresponding to the time of takeoff-from-ice and a frame corresponding to the time of landing-on-ice of the jump.

20. A recording medium storing an information processing program that is executable by a computer to perform processing, the processing comprising:
acquiring an image captured via a camera that images an athlete on a skating rink;
identifying a height of a blade of skating shoes worn by the athlete in each of a plurality of frames included in the image; and
based on a change in the height, and time information of each of the plurality of frames, estimating a time of takeoff-from-ice and a time of landing-on-ice of a jump performed by the athlete.
